# EUROPEAN PATENT SPECIFICATION

(11) **EP 4 096 077 B1**
(45) Date of publication and mention of the grant of the patent: **14.02.2024**
(21) Application number: 20915516.7
(22) Date of filing: 23.07.2020
(51) Int. Cl.: H02K 41/035, G02B 7/09, G02B 27/64, G03B 5/00, G03B 13/36, G03B 30/00, H04N 23/55, H04N 23/57, H04N 23/68, G02B 7/02, G02B 7/08

(54) **VOICE COIL MOTOR HAVING FIVE-AXIS OIS STRUCTURE, CAMERA APPARATUS AND ELECTRONIC DEVICE**
SCHWINGSPULENMOTOR MIT FÜNFACHSIGER OIS-STRUKTUR, KAMERAVORRICHTUNG UND ELEKTRONISCHE VORRICHTUNG
MOTEUR À BOBINE ACOUSTIQUE AYANT UNE STRUCTURE DE STABILISATEUR OPTIQUE À CINQ AXES, APPAREIL DE CAMÉRA ET DISPOSITIF ÉLECTRONIQUE

(30) Priority: 21.01.2020 CN 202010068222
(43) Date of publication of application: 30.11.2022
(73) Proprietor: New Shicoh Motor Co., Ltd., Jiaxing, Zhejiang 314100 (CN)
(72) Inventor: WEI, Hua, Jiaxing, Zhejiang 314100 (CN)
(74) Representative: Ipside
(86) International application number: PCT/CN2020/103724
(87) International publication number: WO 2021/147280

(56) References cited:
- EP-A1- 3 076 235
- WO-A1-2014/008012
- CN-A- 102 759 787
- CN-A- 102 819 086
- CN-A- 104 238 069
- CN-A- 105 305 773
- CN-A- 105 305 773
- CN-A- 106 094 244
- CN-A- 106 817 007
- CN-A- 106 817 007
- CN-A- 107 329 348
- CN-A- 108 155 771
- CN-A- 109 709 741
- CN-A- 111 130 304
- CN-U- 207 166 338
- CN-U- 207 475 378
- CN-U- 207 718 060
- CN-U- 211 557 118
- KR-A- 20190 002 149
- US-A1- 2017 235 094
- US-B2- 10 484 583

## Description

### Technical Field

The present invention relates to the field of voice coil motors, in particular to a voice coil motor with a five-axis OIS structure, a camera device, and electronic equipment.

### Background of the Invention

The existing voice coil motor mainly includes a lens, a lens holder, a magnet, a coil, a spring and a housing, and the housing is square.

The voice coil motor has the characteristics of high frequency response and high precision. Its main principle is to control the stretched position of the spring by changing direct current in the coil of the motor in a permanent magnetic field, thereby driving up and down movement to achieve focusing. Mobile phone cameras widely use VCM to achieve auto-focusing, and the position of the lens can be adjusted through the VCM to present clear images. Most of the traditional voice coil motors can only drive the mobile phone camera to move back and forth, so the focusing effect is poor. Voice coil motors of the prior art are disclosed in CN106817007A, EP3076235A1, CN105305773A and CN207475378U.

There are also some voice coil motors that can achieve horizontal movement stabilization, but cannot achieve flip stabilization or achieve flip stabilization alone, and cannot achieve multiaxis OIS effect.

Therefore, it is necessary to improve such a structure to overcome the above shortcomings.

### Summary of the Invention

The objective of the present invention is to provide a voice coil motor with a five-axis OIS structure, a camera device, and electronic equipment, in which a translation and deflection stabilization function of the voice coil motor is realized through a three-axis OIS mechanism, a flip stabilization function of the voice coil motor is realized through a pan-tilt OIS mechanism, a five-axis OIS function is thus realized, and the stabilization performance of the voice coil motor is improved.

The above technical objective of the present invention is achieved by the following technical solutions: a voice coil motor with a five-axis OIS structure, including a voice coil motor body, wherein the voice coil motor body is provided with a three-axis OIS mechanism, and a pan-tilt OIS mechanism is disposed outside the three-axis OIS mechanism;

The three-axis OIS mechanism includes a drive frame disposed outside the voice coil motor body and sleeved on the voice coil motor body, a base disposed on the drive frame, a printed circuit board (PCB), a coil fixing plate connected to the base, and a plurality of three-axis OIS coils disposed on the coil fixing plate and corresponding to magnets in the voice coil motor body, the coil fixing plate is located at the end of the voice coil motor body away from a lens in the voice coil motor body, and the drive frame is movable relative to the base;

The pan-tilt OIS mechanism includes a shell disposed outside the drive frame and connected to the base, a mounting spring disposed in the shell and connected to the voice coil motor body, four pan-tilt magnets disposed on the inner wall of the shell, and four pan-tilt coils disposed on a side wall of the drive frame and corresponding to the pan-tilt magnets.

A further configuration of the present invention is: there are eight three-axis OIS coils, and each magnet in the voice coil motor body corresponds to two three-axis OIS coils.

A further configuration of the present invention is: the mounting spring includes a fixing ring portion that is annular and is connected to the voice coil motor body, a connecting ring portion located outside the fixing ring portion, two first connecting portions disposed between the connecting ring portion and the fixing ring portion symmetrically, second connecting portions connected to the outer wall of the connecting ring portion and disposed opposite to the first connecting portions, and mounting portions connected to the second connecting portions and connected to the inner wall of the shell, and the fixing ring portion, the first connecting portions, the connecting ring portion, the second connecting portions, and the mounting portions are integrally disposed.

A further configuration of the present invention is: the inner wall of the shell is provided with a mounting ring for connection with the mounting portions.

A further configuration of the present invention is: the three-axis OIS coils are flexible printing coils, and the three-axis OIS coils are printed on the coil fixing plate.

A further configuration of the present invention is: a camera device, including the voice coil motor with a five-axis OIS structure according to any one of claims 1 to 5.

A further configuration of the present invention is: electronic equipment, including the voice coil motor with a five-axis OIS structure according to any one of claims 1 to 5.

To sum up, the present invention has the following beneficial effects:
After the three-axis OIS coils are powered on and when the voice coil motor body and the drive frame are displaced perpendicular to the lens, the force between the three-axis OIS coils and the magnets in the voice coil motor body drives the voice coil motor body and the drive frame to reset quickly to achieve horizontal displacement stabilization. In addition, when the voice coil motor body deflects with the lens as the axis, the force between the three-axis OIS coils and the magnets in the voice coil motor body also drives the voice coil motor body and the drive frame to deflect and reset quickly, so as to realize a three-axis stabilization function of the voice coil motor;
After the pan-tilt coils are powered on and when the voice coil motor body and the drive frame flip, the force between the pan-tilt coils and the pan-tilt magnets drives the voice coil motor body and the drive frame to quickly correct the resetting, so as to realize a flip stabilization function in two vertical axial directions;
Therefore, a five-axis stabilization function of the voice coil motor is realized through the three-axis OIS mechanism and the pan-tilt OIS mechanism, and the stabilization performance of the voice coil motor is improved.

Through the mounting spring, the relative position of the voice coil motor is effectively fixed, the balance and stability of the voice coil motor are maintained, and the three-axis OIS mechanism and the pan-tilt OIS mechanism can realize the stabilization function of the voice coil motor.

By configuring the three-axis OIS coils as flexible printing coils, the size of this embodiment can be effectively reduced, and the processing cost can be saved.

### Brief description of the Drawings

Fig. 1 is a schematic structural diagram of Embodiment 1;
Fig. 2 is a cross-sectional view of Embodiment 1;
Fig. 3 is an exploded cross-sectional view of Embodiment 1;
Fig. 4 is a schematic diagram of a mounting spring in Embodiment 1.

Names of corresponding parts indicated by numerals in the figures: 1 - voice coil motor body; 2 - drive frame; 3 - base; 4 - PCB; 5 - coil fixing plate; 6 - three-axis OIS coil; 7 - shell; 8 - mounting spring; 9 - pan-tilt magnet; 10 - pan-tilt coil; 11 - fixing ring portion; 12 - connecting ring portion; 13 - first connecting portion; 14 - second connecting portion; 15 - mounting portion; 16 - mounting ring.

### Detailed Description of Embodiments

In order to make the technical means, creative features, objectives and effects of the present invention easy to understand, the present invention will be further explained below in conjunction with the drawings and specific embodiments.

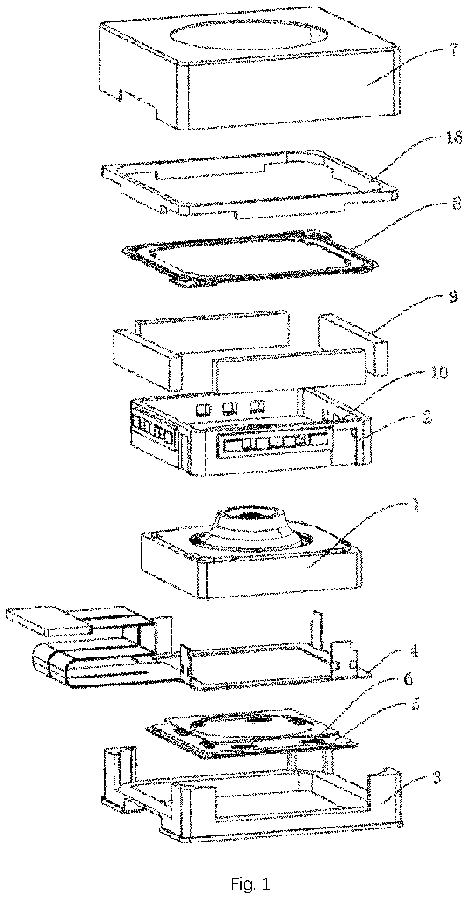

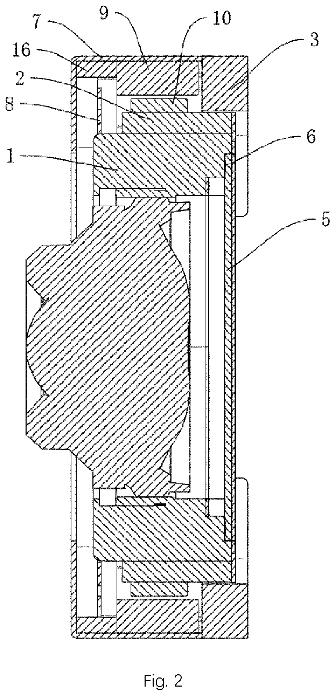

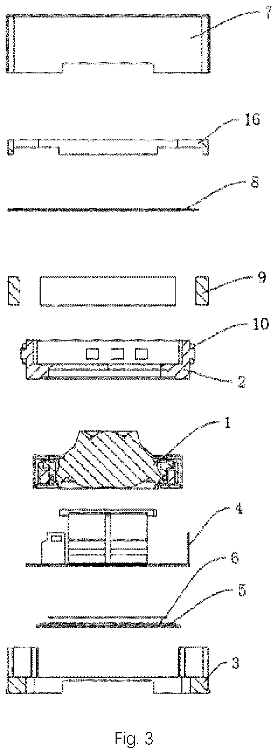

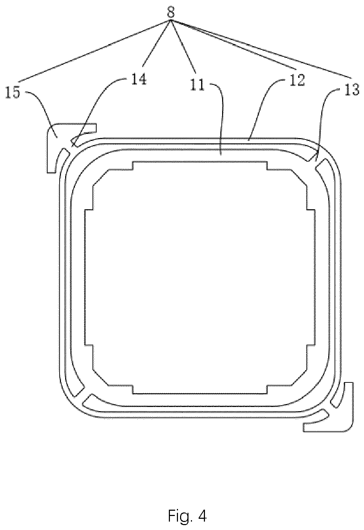

Embodiment 1: As shown in Figs. 1 to 4, a voice coil motor with a five-axis OIS structure proposed by the present invention includes a voice coil motor body 1. The voice coil motor body 1 may be of an existing voice coil motor structure. The voice coil motor body 1 is provided with a three-axis OIS mechanism, and a pan-tilt OIS mechanism is disposed outside the three-axis OIS mechanism.

The three-axis OIS mechanism includes a drive frame 2 disposed outside the voice coil motor body 1 and sleeved on the voice coil motor body 1, a base 3 disposed on the drive frame 2, a printed circuit board (PCB) 4, a coil fixing plate 5 connected to the base 3, and a plurality of three-axis OIS coils 6 disposed on the coil fixing plate 5 and corresponding to magnets in the voice coil motor body 1. The coil fixing plate 5 is located at the end of the voice coil motor body 1 away from a lens in the voice coil motor body 1, the voice coil motor body 1 is mounted on the drive frame 2, and the drive frame 2 is movable relative to the base 3. There are eight three-axis OIS coils 6, and each magnet in the voice coil motor body 1 corresponds to two three-axis OIS coils 6, that is, two adjacent three-axis OIS coils 6 are located below the magnet in the voice coil motor body 1. After the three-axis OIS coils 6 are powered on and when the voice coil motor body 1 and the drive frame 2 are displaced perpendicular to the lens, the force between the three-axis OIS coils 6 and the magnets in the voice coil motor body 1 drives the voice coil motor body 1 and the drive frame 2 to reset quickly to achieve horizontal displacement stabilization. In addition, when the voice coil motor body 1 deflects with the lens as the axis, the force between the three-axis OIS coils 6 and the magnets in the voice coil motor body 1 also drives the voice coil motor body 1 and the drive frame 2 to deflect and reset quickly, so as to realize a three-axis stabilization function of the voice coil motor.

The pan-tilt OIS mechanism includes a shell 7 disposed outside the drive frame 2 and connected to the base 3, a mounting spring 8 disposed in the shell 7 and connected to the voice coil motor body 1, four pan-tilt magnets 9 disposed on the inner wall of the shell 7, and four pan-tilt coils 10 disposed on a side wall of the drive frame 2 and corresponding to the pan-tilt magnets 9. The shell 7 is fixedly mounted on the base 3 and covers the voice coil motor body 1 and the drive frame 2. The voice coil motor body 1 and the drive frame 2 are suspended in the shell 7 through the mounting spring 8, which facilitates the realization of the stabilization function. After the pan-tilt coils 10 are powered on and when the voice coil motor body 1 and the drive frame 2 flip, the force between the pan-tilt coils 10 and the pan-tilt magnets 9 drives the voice coil motor body 1 and the drive frame 2 to quickly correct the resetting, so as to realize a flip stabilization function in two vertical axial directions.

Therefore, a five-axis stabilization function of the voice coil motor is realized through the three-axis OIS mechanism and the pan-tilt OIS mechanism, and the stabilization performance of the voice coil motor is improved.

The specific structure of the mounting spring 8 includes a fixing ring portion 11 that is annular and is connected to the voice coil motor body 1, a connecting ring portion 12 located outside the fixing ring portion 11, two first connecting portions 13 disposed between the connecting ring portion 12 and the fixing ring portion 11 symmetrically, second connecting portions 14 connected to the outer wall of the connecting ring portion 12 and disposed opposite to the first connecting portions 13, and mounting portions 15 connected to the second connecting portions 14 and connected to the inner wall of the shell 7, and the fixing ring portion 11, the first connecting portions 13, the connecting ring portion 12, the second connecting portions 14, and the mounting portions 15 are integrally disposed. There may be two mounting portions 15 integrally formed with the second connecting portions 14 respectively, and the other two first connecting portions 13 and second connecting portions 14 are respectively located at four corners of the connecting ring portion 12. A mounting ring 16 for fixing the mounting portions 15 of the mounting spring 8 is fixedly mounted on the inner wall of the shell 7, and the mounting ring 16 is fixed on the bottom surface of the shell 7. Through the mounting spring 8, the relative position of the voice coil motor is effectively fixed, the balance and stability of the voice coil motor are maintained, and the three-axis OIS mechanism and the pan-tilt OIS mechanism can realize the stabilization function of the voice coil motor.

In this embodiment, the three-axis OIS coils 6 may be configured as flexible printing coils, and the three-axis OIS coils 6 are printed on the coil fixing plate 5. By configuring the three-axis OIS coils 6 as flexible printing coils, the size of this embodiment can be effectively reduced, and the processing cost can be saved.

Embodiment 2: A camera device is proposed. The camera device is equipped with the voice coil motor with a five-axis OIS structure described in Embodiment 1.

Embodiment 3: Electronic equipment is proposed. The electronic equipment is equipped with the voice coil motor with a five-axis OIS structure described in Embodiment 1.

The basic principles, main features and advantages of the present invention are shown and described above. Those skilled in the art should understand that the present invention is not limited by the above embodiments, the above embodiments and the description only illustrate the principles of the present invention, the present invention will have various changes and improvements without departing from the spirit and scope of the present invention, and these changes and improvements all fall within the scope of the present invention. The scope of the present invention is defined by the appended claims.

## Claims

1. A voice coil motor with a five-axis OIS structure, comprising a voice coil motor body (1), wherein the voice coil motor body (1) is provided with a three-axis OIS mechanism, and a pan-tilt OIS mechanism is disposed outside the three-axis OIS mechanism;
the three-axis OIS mechanism comprises a drive frame (2) disposed outside the voice coil motor body (1) and sleeved on the voice coil motor body (1), a base (3) disposed on the drive frame (2), a printed circuit board (PCB) (4), a coil fixing plate (5) connected to the base (3), and a plurality of three-axis OIS coils (6) disposed on the coil fixing plate (5) and corresponding to magnets in the voice coil motor body (1), the coil fixing plate (5) is located at the end of the voice coil motor body (1) away from a lens in the voice coil motor body (1), and the drive frame (2) is movable relative to the base (3);
the pan-tilt OIS mechanism comprises a shell (7) disposed outside the drive frame (2) and connected to the base (3), a mounting spring (8) disposed in the shell (7) and connected to the voice coil motor body (1), four pan-tilt magnets (9) disposed on the inner wall of the shell (7), and four pan-tilt coils (10) disposed on a side wall of the drive frame (2) and corresponding to the pan-tilt magnets (9).

2. The voice coil motor with a five-axis OIS structure according to claim 1, wherein there are eight three-axis OIS coils (6), and each magnet in the voice coil motor body (1) corresponds to two three-axis OIS coils (6).

3. The voice coil motor with a five-axis OIS structure according to claim 1, wherein the mounting spring (8) comprises a fixing ring portion (11) that is annular and is connected to the voice coil motor body (1), a connecting ring portion (12) located outside the fixing ring portion (11), two first connecting portions (13) disposed between the connecting ring portion (12) and the fixing ring portion (11) symmetrically, second connecting portions (14) connected to the outer wall of the connecting ring portion (12) and disposed opposite to the first connecting portions (13), and mounting portions (15) connected to the second connecting portions (14) and connected to the inner wall of the shell (7), and the fixing ring portion (11), the first connecting portions (13), the connecting ring portion (12), the second connecting portions (14), and the mounting portions (15) are integrally disposed.

4. The voice coil motor with a five-axis OIS structure according to claim 3, wherein the inner wall of the shell (7) is provided with a mounting ring (16) for connection with the mounting portions (15).

5. The voice coil motor with a five-axis OIS structure according to claim 1 or 2, wherein the three-axis OIS coils (6) are flexible printing coils, and the three-axis OIS coils (6) are printed on the coil fixing plate (5).

6. A camera device, comprising the voice coil motor with a five-axis OIS structure according to any one of claims 1 to 5.

7. Electronic equipment, comprising the voice coil motor with a five-axis OIS structure according to any one of claims 1 to 5.

## Patentansprüche

1. Schwingspulenmotor mit einer fünfachsigen OIS-Struktur, ein Schwingspulenmotorgehäuse (1) umfassend, wobei das Schwingspulenmotorgehäuse (1) mit einem dreiachsigen OIS-Mechanismus ausgestattet ist, und ein Schwenk/Neige-OIS-Mechanismus außerhalb des dreiachsigen OIS-Mechanismus angeordnet ist;
wobei der dreiachsige OIS-Mechanismus einen Antriebsrahmen (2) umfasst, der außerhalb des Schwingspulenmotorgehäuses (1) angeordnet ist, und auf das Schwingspulenmotorgehäuse (1) aufgestülpt ist, eine Basis (3) auf dem Antriebsrahmen (2) angeordnet ist, eine Leiterplatte (PCB) (4) und eine Spulenfixierplatte (5) mit der Basis (3) verbunden sind, und eine Vielzahl von dreiachsigen OIS-Spulen (6), die auf der Spulenfixierplatte (5) angeordnet sind, und Magneten im Schwingspulenmotorgehäuse (1) entsprechen, wobei sich die Spulenfixierplatte (5) am Ende des Schwingspulenmotorgehäuses (1) befindet, entfernt von einer Linse im Schwingspulenmotorgehäuse (1), und der Antriebsrahmen (2) relativ zur Basis (3) beweglich ist;
wobei der Schwenk/Neige-OIS-Mechanismus eine Hülle (7) umfasst, die außerhalb des Antriebsrahmens (2) angeordnet und mit der Basis (3) verbunden ist, eine Montagefeder (8), die in der Hülle (7) angeordnet und mit dem Schwingspulenmotorgehäuse (1) verbunden ist, vier Schwenk/Neige-Magnete (9), die an der Innenwand der Hülle (7) angeordnet sind, und vier Schwenk/Neige-Spulen (10), die an einer Seitenwand des Antriebsrahmens (2) angeordnet sind und den Schwenk/Neige-Magneten (9) entsprechen.

2. Schwingspulenmotor mit einer fünfachsigen OIS-Struktur nach Anspruch 1, wobei acht dreiachsige OIS-Spulen (6) vorhanden sind, und jeder Magnet im Schwingspulenmotorgehäuse (1) zwei dreiachsigen OIS-Spulen (6) entspricht.

3. Schwingspulenmotor mit einer fünfachsigen OIS-Struktur nach Anspruch 1, wobei die Montagefeder (8) einen Fixierringabschnitt (11) umfasst, der ringförmig ist und mit dem Schwingspulenmotorgehäuse (1) verbunden ist, einen Verbindungsringabschnitt (12), der sich außerhalb des Fixierringabschnitts (11) befindet, zwei erste Verbindungsabschnitte (13), die symmetrisch zwischen dem Verbindungsringabschnitt (12) und dem Fixierringabschnitt (11) angeordnet sind, zweite Verbindungsabschnitte (14), die mit der Außenwand des Verbindungsringabschnitts (12) verbunden und gegenüber den ersten Verbindungsabschnitten (13) angeordnet sind, und Montageabschnitte (15), die mit den zweiten Verbindungsabschnitten (14) verbunden und mit der Innenwand der Hülle (7) verbunden sind, und wobei der Fixierringabschnitt (11), die ersten Verbindungsabschnitte (13), der Verbindungsringabschnitt (12), die zweiten Verbindungsabschnitte (14) und die Montageabschnitte (15) ganzheitlich angeordnet sind.

4. Schwingspulenmotor mit einer fünfachsigen OIS-Struktur nach Anspruch 3, wobei die Innenwand der Hülle (7) mit einem Montagering (16) zur Verbindung mit den Montageabschnitten (15) ausgestattet ist.

5. Schwingspulenmotor mit einer fünfachsigen OIS-Struktur nach Anspruch 1 oder 2, wobei die dreiachsigen OIS-Spulen (6) flexible Druckspulen sind, und die dreiachsigen OIS-Spulen (6) auf die Spulenfixierplatte (5) gedruckt sind.

6. Kameravorrichtung, den Schwingspulenmotor mit einer fünfachsigen OIS-Struktur nach einem der Ansprüche 1 bis 5 umfassend.

7. Elektronische Ausrüstung, den Schwingspulenmotor mit einer fünfachsigen OIS-Struktur nach einem der Ansprüche 1 bis 5 umfassend.

## Revendications

1. Moteur à bobine acoustique avec une structure de stabilisateur d'image à cinq axes, comprenant un corps de moteur à bobine acoustique (1),
dans lequel le corps de moteur à bobine acoustique (1) est doté d'un mécanisme de stabilisateur d'image à trois axes, et un mécanisme de stabilisateur d'image à panoramique horizontal-vertical est disposé à l'extérieur du mécanisme de stabilisateur d'image à trois axes ;
le mécanisme de stabilisateur d'image à trois axes comprend un cadre d'entraînement (2) disposé à l'extérieur du corps de moteur à bobine acoustique (1) et emmanché sur le corps de moteur à bobine acoustique (1), une base (3) disposée sur le cadre d'entraînement (2), une carte de circuit imprimé (PCB) (4), une plaque de fixation de bobine (5) reliée à la base (3), et une pluralité de bobines de stabilisateur d'image à trois axes (6) disposées sur la plaque de fixation de bobine (5) et correspondant à des aimants dans le corps de moteur à bobine acoustique (1), la plaque de fixation de bobine (5) est située à l'extrémité du corps de moteur à bobine acoustique (1) à distance d'une lentille dans le corps de moteur à bobine acoustique (1), et le cadre d'entraînement (2) est mobile par rapport à la base (3) ; le mécanisme de stabilisateur d'image à panoramique horizontal-vertical comprend une coque (7) disposée à l'extérieur du cadre d'entraînement (2) et reliée à la base (3), un ressort de montage (8) disposé sur la coque (7) et relié au corps de moteur à bobine acoustique (1), quatre aimants à panoramique horizontal-vertical (9) disposés sur la paroi interne de la coque (7), et quatre bobines à panoramique horizontal-vertical (10) disposées sur une paroi latérale du cadre d'entraînement (2) et correspondant aux aimants à panoramique horizontal-vertical (9).

2. Moteur à bobine acoustique avec une structure de stabilisateur d'image à cinq axes selon la revendication 1, dans lequel il y a huit bobines de stabilisateur d'image à trois axes (6), et chaque aimant dans le corps de moteur à bobine acoustique (1) correspond à deux bobines de stabilisateur d'image à trois axes (6).

3. Moteur à bobine acoustique avec une structure de stabilisateur d'image à cinq axes selon la revendication 1, dans lequel le ressort de montage (8) comprend une partie bague de fixation (11) qui est annulaire et est reliée au corps de moteur à bobine acoustique (1), une partie bague de liaison (12) située à l'extérieur de la partie bague de fixation (11), deux premières parties de liaison (13) disposées symétriquement entre la partie bague de liaison (12) et la partie bague de fixation (11), de deuxièmes parties de liaison (14) reliées à la paroi externe de la partie bague de liaison (12) et disposées à l'opposé des premières parties de liaison (13), et des parties de montage (15) reliées aux deuxièmes parties de liaison (14) et reliées à la paroi interne de la coque (7), et la partie bague de fixation (11), les premières parties de liaison (13), la partie bague de liaison (12), les deuxièmes parties de liaison (14) et les parties de montage (15) sont disposées d'un seul tenant.

4. Moteur à bobine acoustique avec une structure de stabilisateur d'image à cinq axes selon la revendication 3, dans lequel la paroi interne de la coque (7) est dotée d'une bague de montage (16) pour une liaison aux parties de montage (15).

5. Moteur à bobine acoustique avec une structure de stabilisateur d'image à cinq axes selon la revendication 1 ou 2, dans lequel les bobines de stabilisateur d'image à trois axes (6) sont des bobines d'impression souples, et les bobines de stabilisateur d'image à trois axes (6) sont imprimées sur la plaque de fixation de bobine (5).

6. Dispositif de caméra, comprenant le moteur à bobine acoustique avec une structure de stabilisateur d'image à cinq axes selon l'une quelconque des revendications 1 à 5.

7. Équipement électronique, comprenant le moteur à bobine acoustique avec une structure de stabilisateur d'image à cinq axes selon l'une quelconque des revendications 1 à 5.
